# EUROPEAN PATENT APPLICATION

(11) **EP 3 421 512 A1**
(43) Date of publication of application: **02.01.2019**
(21) Application number: 16907291.5
(22) Date of filing: 30.06.2016
(51) Int. Cl.: C08G 18/38

(54) **METHOD FOR PRODUCING CURED PRODUCT, CURED PRODUCT, AND EYEGLASS LENS SUBSTRATE**

(71) Applicant: Hoya Lens Thailand Ltd., Pathumthani 12130 (TH)
(72) Inventor: KAGEYAMA Yukio, Tokyo 160-8347 (JP); KOUSAKA Masahisa, Tokyo 160-8347 (JP); YAMAMOTO Akinori, Tokyo 160-8347 (JP)
(74) Representative: Beckmann, Claus
(86) International application number: PCT/JP2016/069442
(87) International publication number: WO 2018/003058

(57) **Abstract**

Provided are: a method for producing a cured product, including a curable composition preparing step of preparing a curable composition by mixing a polyiso(thio)cyanate compound with a polythiol compound having a water content of less than 20 ppm on a mass basis, and a curing step of curing the curable composition to obtain a cured product; a cured product obtained by curing a curable composition containing a polyiso(thio)cyanate compound and a polythiol compound having a water content of less than 20 ppm on a mass basis; and an eyeglass lens substrate including the cured product.

## Description

### Technical Field

The present invention relates to a method for producing a cured product, a cured product, and an eyeglass lens substrate, and specifically to a method for producing a cured product obtained by curing a curable composition containing a polythiol compound and a polyiso(thio)cyanate compound, a cured product, and an eyeglass lens substrate.

### Background Art

A polythiourethane-based resin obtained by causing a curing reaction between a polythiol compound and a polyiso(thio)cyanate compound is widely used as a material for various optical components such as an eyeglass lens (for example, refer to Patent Literature 1). Patent Literature 1: JP 5026432 B2

### Summary of Invention

One of physical properties required for the polythiourethane-based resin is high heat resistance. This is due to the following reason. For example, an eyeglass lens is usually shipped as a product lens after one or more functional films (for example, a hard coat, an antireflection film, and the like) are formed on a lens substrate. The functional film is formed by various film forming methods such as vacuum vapor deposition and a coating method for applying a coating liquid containing a curable compound and then curing the curable compound by heating. Many film forming methods involve a heat treatment. If a lens substrate has poor heat resistance, the quality of a product lens may be deteriorated due to deformation and/or deterioration of the lens substrate by a heat treatment. For example, when the lens substrate is deformed, a functional film formed on the lens substrate cannot follow the deformation of the lens substrate and a crack may be generated in the functional film. Meanwhile, if the lens substrate is to be heated at a heating temperature at which the lens substrate can withstand in order to prevent such deterioration in quality of a product lens, film forming conditions are restricted, and usable film forming materials are also limited. In addition, in a process of producing not only an eyeglass lens but also various kinds of optical components, a resin substrate is generally subjected to a treatment including heating such as a treatment of forming a functional film. Therefore, it is desired to improve heat resistance of a polythiourethane-based resin in order to provide a polythiourethane-based resin useful as such a substrate.

An aspect of the present invention provides a means for improving heat resistance of a polythiourethane-based resin obtained by causing a curing reaction between a polythiol compound and a polyiso(thio)cyanate compound.

An aspect of the present invention relates to a method for producing a cured product, including:
a curable composition preparing step of preparing a curable composition by mixing a polyiso(thio)cyanate compound with a polythiol compound having a water content of less than 20 ppm on a mass basis (hereinafter referred to simply as "water content"); and
a curing step of curing the curable composition to obtain a cured product.

The present inventors made intensive studies in order to find a means for improving heat resistance of a cured product (polythiourethane-based resin) obtained by causing a curing reaction between a polythiol compound and a polyiso(thio)cyanate compound, and have obtained new findings which have not been known hitherto that water contained in the polythiol compound affects heat resistance of a cured product obtained by causing a curing reaction between the polyiso(thio)cyanate compound and the polythiol compound. The present inventors further made intensive studies based on such findings and as a result, have completed the method for producing a cured product according to an aspect of the present invention.

According to an aspect of the present invention, it is possible to improve heat resistance of a cured product obtained by causing a curing reaction between a polythiol compound and a polyiso(thio)cyanate compound.

### Description of Embodiments

An aspect of the present invention relates to the method for producing a cured product.

Furthermore, an aspect of the present invention also provides a cured product obtained by curing a curable composition containing a polyiso(thio)cyanate compound and a polythiol compound having a water content of less than 20 ppm on a mass basis, and an eyeglass lens substrate including the cured product.

Hereinafter, the method for producing a cured product, the cured product, and the eyeglass lens substrate will be described in more detail.

### <Curable composition preparing step>

The curable composition contains at least a polythiol compound and a polyiso(thio)cyanate compound. The "polythiol compound" is a polyfunctional compound having two or more thiol groups (-SH) in one molecule. In the present invention and the present specification, the "polyiso(thio)cyanate compound" is used to encompass a polyisocyanate compound and a polyisothiocyanate compound. Incidentally, isocyanate is sometimes referred to as isocyanate, and isothiocyanate is sometimes referred to as isothiocyanate. The "iso(thio)cyanate group" is used to encompass an isocyanate group (-N=C=O) and an isothiocyanate group (-N=C=S). The "polyiso(thio)cyanate compound" is a polyfunctional compound having two or more iso(thio)cyanate groups in one molecule. By causing a curing reaction between a polythiol compound and a polyiso(thio)cyanate compound, a thiol group included in the polythiol compound reacts with an iso(thio)cyanate group included in the polyiso(thio)cyanate compound to obtain a reaction product having the following bond: 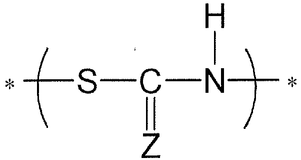 in a molecule. In the above, Z represents an oxygen atom or a sulfur atom. A reaction between the thiol group and the isocyanate group forms the bond in which Z is an oxygen atom. A reaction between the thiol group and the isothiocyanate group forms the bond in which Z is a sulfur atom. In the present invention and the present specification, a reaction product (resin) containing a plurality of the bonds in one molecule is referred to as "polythiourethane-based resin".

For example, Patent Literature 1 (JP 5026432 B2) describes that an optical material resin producing method for polymerizing a polymerizable composition containing a polythiol compound and a polyiso(thio)cyanate compound (described as "polyiso(thio)cyanate compound" in Patent Literature 1) essentially requires that the water content of the polythiol compound before polymerization should be 20 to 600 ppm (refer to claim 1 of Patent Literature 1). In addition, Patent Literature 1 does not describe anything about a relationship between water contained in the polythiol compound and heat resistance of the polythiourethane-based resin.

Meanwhile, the present inventors made intensive studies and as a result, have obtained new findings which have not been known hitherto that water contained in the polythiol compound affects the heat resistance of the polythiourethane-based resin. The present inventors further made intensive studies based on such findings and as a result, have newly found that by using a polythiol compound having a water content different from the water content of less than 20 ppm essentially required in Patent Literature 1 as a starting material for synthesis, it is possible to obtain a polythiourethane-based resin having better heat resistance than a polythiourethane-based resin obtained by using a polythiol compound having a water content of 20 ppm or more as a starting material for synthesis. The water content of the polythiol compound used in the method for producing a cured product is less than 20 ppm. The water content is preferably 19 ppm or less, more preferably 18 ppm or less, still more preferably 15 ppm or less, further still more preferably 12 ppm or less, and further still more preferably 10 ppm or less from a viewpoint of further improving heat resistance of the polythiourethane-based resin. The water content of the polythiol compound can be, for example, 5 ppm or more or 7 ppm or more. However, a lower water content is more preferable for improving heat resistance of the polythiourethane-based resin. Therefore, the water content may be lower than the lower limit exemplified above.

The water content of the polythiol compound in the present invention and the present specification is a value determined by measurement performed by a Karl Fisher method under an environment of a temperature of 20 to 25°C and absolute humidity of 0.8 to 1.2 g/m³ using a water vaporizer. The water content measurement by the Karl Fischer method may be performed by a coulometric titration method or a volume titration method.

As a method for reducing the water content of the polythiol compound, a nitrogen bubbling method, a vacuum degassing method, an adsorption method for immersing anhydrous sodium sulfate, molecular sieve, or the like, and the like can be used singly or in combination of two or more methods thereof. As a result, the polythiol compound having a water content of less than 20 ppm can be obtained.

As the polythiol compound, various polythiol compounds such as an aliphatic polythiol compound and an aromatic polythiol compound can be used. The number of thiol groups contained in one molecule of the polythiol compound is 2 or more, preferably 2 to 6, and more preferably 2 to 4. Specific examples of the polythiol compound include various polythiol compounds exemplified in paragraphs 0035 to 0044 of WO 2008/047626 A1. Preferable examples of the polythiol compound include bis(mercaptomethyl)-3,6,9,-trithia-undecanedithiol, 2,3-bismercaptoethylthio-1-mercaptopropane, bismercaptomethyldithian, pentaerythritol-tetrakismercapto acetate, pentaerythritol-tetrakismercapto propionate, trimethylolpropane trismercapto acetate, and trimethylolpropane trismercapto propionate. These compounds may be used singly or in combination of two or more kinds thereof.

As the polyiso(thio)cyanate compound to be mixed with the polythiol compound for preparing a curable composition, various polyiso(thio)cyanate compounds such as an aliphatic polyiso(thio)cyanate compound, an alicyclic polyiso(thio)cyanate compound, and an aromatic polyiso(thio)cyanate compound can be used. The number of iso(thio)cyanate groups contained in one molecule of the polyiso(thio)cyanate compound is 2 or more, preferably 2 to 4, and more preferably 2 or 3. Specific examples of the polyiso(thio)cyanate compound include various compounds exemplified as a polyiso(thio)cyanate compound in paragraph 0052 of JP 5319037 B2. Preferable examples of the polyiso(thio)cyanate compound include: an aliphatic polyisocyanate compound such as hexamethylene diisocyanate, 1,5-pentane diisocyanate, isophorone diisocyanate, bis(isocyanatomethyl) cyclohexane, dicyclohexylmethane diisocyanate, 2,5-bis(isocyanatomethyl)-bicyclo [2.2.1]heptane, 2,6-bis(isocyanatomethyl)-bicyclo [2.2.1]heptane, bis(4-isocyanatocyclohexyl) methane, 1,3-bis(isocyanatomethyl) cyclohexane, or 1,4-bis(isocyanatomethyl) cyclohexane; and an aromatic polyisocyanate compound such as bis(isocyanatomethyl) benzene, m-xylylene diisocyanate, p-xylylene diisocyanate, 1,3-diisocyanatobenzene, tolylene diisocyanate, 2,4-diisocyanatotoluene, 2,6-diisocyanatotoluene, or 4,4'-methylenebis(phenyl isocyanate). Furthermore, a halogen substitution product of the polyiso(thio)cyanate compound such as a chlorine substitution product thereof or a bromine substitution product thereof, an alkyl substitution product thereof, an alkoxy substitution product thereof, a nitro substitution product thereof, a prepolymer type modified product thereof with a polyhydric alcohol, a carbodiimide modified product thereof, a urea modified product thereof, a biuret modified product thereof, a dimerization or trimerization reaction product thereof, and the like can be used. These compounds may be used singly or in combination of two or more kinds thereof.

The curable composition can be prepared by mixing a polyiso(thio)cyanate compound with a polythiol compound having a water content of less than 20 ppm. A mixing ratio between the polythiol compound and the polyiso(thio)cyanate compound in the curable composition is not particularly limited, but for example, as a molar ratio, a ratio of thiol group contained in the polythiol compound/iso(thio)cyanate group contained in the polyiso(thio)cyanate compound may be 0.5 to 3.0, preferably 0.8 to 1.4, and more preferably 0.9 to 1.1. The mixing ratio within the above range is preferable for obtaining a curable composition capable of providing a cured product having various excellent physical properties such as high refractive index and high heat resistance.

At the time of preparing the curable composition, one or more components other than the polyiso(thio)cyanate compound and the polythiol compound having a water content of less than 20 ppm may be mixed. Specific examples of such other components include a reaction catalyst for a curing reaction between a polythiol compound and a polyiso(thio)cyanate compound. For the other components that may be mixed, for example, refer to paragraphs 0055, 0057, and 0058 to 0064 of JP 5319037 B2. In addition, it is also possible to use one or more additives commercially available generally as additives for various resins such as a polythiourethane-based resin. The curable composition can be prepared by sequentially mixing the above-described various components at the same time or in any order. The preparation method is not particularly limited, and any known method for preparing a curable composition can be adopted without any limitation.

### <Curing step>

By curing a curable composition prepared in the above-described curable composition preparing step, a polythiourethane-based resin useful as a material of an optical component such as an eyeglass lens can be obtained as a cured product. By using a polythiol compound having a water content of less than 20 ppm as a polythiol compound, it is possible to obtain a cured product (polythiourethane-based resin) having higher heat resistance than a case of using a polythiol compound having a water content of 20 ppm or more. Examples of an index of the heat resistance include a glass transition temperature (Tg). The glass transition temperature (Tg) in the present invention and the present specification refers to a glass transition temperature measured by a thermomechanical analysis (TMA) penetration method according to JIS K7196-2012. For a specific measurement method, refer to Examples described later. Regarding the heat resistance using the glass transition temperature (Tg) as an index, for example, as Tg, improvement of 2°C or more, for example, improvement of about 2 to 10°C is preferable for enhancing usefulness of a polythiourethane-based resin in the field of producing various kinds of optical components including the field of producing an eyeglass lens. Improvement of the heat resistance of the polythiourethane-based resin by using a polythiol compound having a water content of less than 20 ppm as a polythiol compound is, as the glass transition temperature (Tg), more preferably 3°C or more, still more preferably 4°C or more, and further still more preferably 5°C or more.

The curing reaction between a polyiso(thio)cyanate compound and a polythiol compound having a water content of less than 20 ppm can be performed by various curing treatments capable of curing a curable composition. For example, cast polymerization is preferable for producing a cured product (also referred to as "plastic lens") having a lens shape. In cast polymerization, a curable composition is injected into a cavity of a molding die having two molds facing each other with a predetermined gap and a cavity formed by closing the gap, and the curable composition is polymerized (curing reaction) in the cavity to obtain a cured product. For details of a molding die usable for cast polymerization, for example, refer to paragraphs 0012 to 0014 and FIG. 1 of JP 2009-262480 A. Note that the publication describes a molding die in which the gap between the two molds is closed with a gasket as a sealing member, but a tape can be used as the sealing member.

In an aspect, cast polymerization can be performed as follows. A curable composition is injected into a molding die cavity from an injection port formed on a side surface of the molding die (injection step). After the injection, by polymerizing the curable composition (curing reaction) preferably by heating, the curable composition is cured to obtain a cured product having an internal shape of the cavity transferred thereon (curing step). A polymerization condition is not particularly limited, and can be appropriately set depending on the composition of a curable composition or the like. As an example, a molding die having a curable composition injected into a cavity can be heated at a heating temperature of 20 to 150°C for about 1 to 72 hours, but the polymerization condition is not limited thereto. In the present invention and the present specification, the temperature such as a heating temperature for cast polymerization refers to a temperature of an atmosphere in which a molding die is placed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used preferably as a lens substrate of an eyeglass lens. Note that the cured product used as a lens substrate of an eyeglass lens can be usually subjected to a post-step such as annealing, a grinding step such as a rounding step, a polishing step, or a step of forming a coat layer such as a primer coat layer for improving impact resistance or a hard coat layer for improving surface hardness after releasing. Furthermore, various functional layers such as an antireflection layer and a water-repellent layer can be formed on the lens substrate. A known technique can be applied to any of these steps without any limitation. In this way, an eyeglass lens in which a lens substrate is the cured product can be obtained. Furthermore, by attaching this eyeglass lens to a frame, eyeglasses can be obtained.

### Examples

Next, the present invention will be described in more detail with Examples, but the present invention is not limited to aspects indicated by Examples. Operation and evaluation described below were performed in air at room temperature (about 20 to 25°C) unless otherwise specified. In addition, % and parts described below are on a mass basis unless otherwise specified.

### [Measurement of water content of polythiol compound]

The water content of a polythiol compound used for preparing a curable composition in each of Examples and Comparative Examples was measured under an environment of a temperature of 20 to 25°C and absolute humidity of 0.8 to 1.2 g/m³ using a Karl Fischer water content measuring apparatus (automatic water content measuring apparatus MKC-610 type manufactured by Kyoto Electronics Manufacturing Co., Ltd.) and a water vaporizer (water vaporizer ADP-611 type manufactured by Kyoto Electronics Manufacturing Co., Ltd.).

The polythiol compound used in each of Examples is a polythiol compound obtained by degassing a commercially available thiol compound under reduced pressure (60°C, 100 Pa) to reduce the water content. The water content was adjusted by time for performing degassing under reduced pressure. For example, in Example 1, degassing under reduced pressure was performed for two hours.

After the water content was measured, a curable composition was prepared within one hour. From the measurement of the water content to the preparation of the curable composition, the water content of the polythiol compound does not change, or even if the water content changes, the amount of change is equal to or lower than a detection limit. In a normal work environment or storage environment, the water content of the polythiol compound does not change, or even if the water content changes, the amount of change is equal to or lower than a detection limit.

### [Measurement of glass transition temperature (Tg) of cured product (polythiourethane-based resin plastic lens)]

The glass transition temperatures (Tg) of a cured product obtained in each of Examples and Comparative examples was measured by a penetration method using a thermal instrument analyzer TMA 8310 manufactured by Rigaku Corporation. A temperature rising rate at the time of measurement was 10 K/min, and an indenter having a diameter of 0.5 mm was used as an indenter for the penetration method.

### [Example 1]

### (Curable composition preparing step)

50.6 parts of xylylene diisocyanate, 0.01 parts of dimethyltin dichloride as a curing catalyst, 0.20 parts of acidic phosphate (JP-506H manufactured by Johoku Chemical Co., Ltd.) as a releasing agent, and 0.50 parts of ultraviolet absorber (Seesorb 701 manufactured by Shipro Kasei Kaisha, Ltd.) were mixed and dissolved. Furthermore, 49.4 parts of bis(mercaptomethyl)-3,6,9-trithia-undecanedithiol having the water content illustrated in Table 1 was added and mixed to prepare a mixture. This mixture was defoamed at 200 Pa for one hour, and then the resulting mixture was filtered with a polytetrafluoroethylene (PTFE) filter having a pore diameter of 5.0 µm.

### (Injection step)

The mixture (curable composition) after filtration was injected into a lens molding die including a glass mold having a diameter of 75 mm and -4.00 D and a tape.

### (Curing step and annealing)

The molding die was put into an electric furnace. The temperature was gradually raised from 15°C to 120°C over 20 hours, and was kept for two hours for polymerization (curing reaction). After completion of the polymerization, the molding die was taken out from the electric furnace, and the resulting product was released from the molding die to obtain a cured product (polythiourethane-based resin plastic lens). The obtained plastic lens was further annealed for three hours in an annealing furnace having a furnace temperature of 120°C.

The curable composition preparing step and the injection step were performed in an atmosphere in which absolute humidity was controlled to the value illustrated in Table 1.

### [Example 2]

A cured product was obtained in a similar manner to Example 1 except that the curable composition preparing step and the injection step were performed in an atmosphere in which absolute humidity was controlled to the value illustrated in Table 1.

### [Example 3]

A cured product was obtained in a similar manner to Example 1 except that bis(mercaptomethyl)-3,6,9-trithia-undecanedithiol having the water content illustrated in Table 1 was used.

### [Example 4]

A cured product was obtained in a similar manner to Example 3 except that the curable composition preparing step and the injection step were performed in an atmosphere in which absolute humidity was controlled to the value illustrated in Table 1.

### [Comparative Examples 1 and 2]

A cured product was obtained in a similar manner to Example 1 except that bis(mercaptomethyl)-3,6,9-trithia-undecanedithiol having the water content illustrated in Table 1 was used.

### [Comparative Example 3]

A cured product was obtained in a similar manner to Comparative Example 2 except that the curable composition preparing step and the injection step were performed in an atmosphere in which absolute humidity was controlled to the value illustrated in Table 1.

### [Example 5]

A cured product was obtained in a similar manner to Example 1 except that 50.6 parts of xylylene diisocyanate was changed to 47.6 parts of bisisocyanatomethyl cyclohexane, the amount of the curing catalyst (dimethyltin dichloride) was changed to 0.40 parts, and bis(mercaptomethyl)-3,6,9-trithia-undecanedithiol was changed to a mixture of 26.2 parts of bismercaptomethyldithian and 26.2 parts of pentaerythritol tetrakis mercaptoacetate (water content: refer to Table 1) as a polythiol compound.

### [Example 6]

A cured product was obtained in a similar manner to Example 5 except that a mixture of 26.2 parts of bismercaptomethyldithian and 26.2 parts of pentaerythritol tetrakis mercaptoacetate (water content: refer to Table 1) was used and the curable composition preparing step and the injection step were performed in an atmosphere in which absolute humidity was controlled to the value illustrated in Table 1.

### [Comparative Example 4]

A cured product was obtained in a similar manner to Example 5 except that a mixture of 26.2 parts of bismercaptomethyldithian and 26.2 parts of pentaerythritol tetrakis mercaptoacetate (water content: refer to Table 1) was used.

### [Example 7]

A cured product was obtained in a similar manner to Example 1 except that 50.6 parts of xylylene diisocyanate was changed to 50.3 parts of bisisocyanatomethyl bicycloheptane, the amount of the curing catalyst (dimethyltin dichloride) was changed to 0.05 parts, and bis(mercaptomethyl)-3,6,9-trithia-undecanedithiol was changed to a mixture of 24.2 parts of bismercaptoethyl thiomercaptopropane and 25.5 parts of pentaerythritol tetrakis mercaptopropionate (water content: refer to Table 1) .

### [Example 8]

A cured product was obtained in a similar manner to Example 7 except that a mixture of 24.2 parts of bismercaptoethyl thiomercaptopropane and 25.5 parts of pentaerythritol tetrakis mercaptopropionate (water content: refer to Table 1) was used and the curable composition preparing step and the injection step were performed in an atmosphere in which absolute humidity was controlled to the value illustrated in Table 1.

### [Comparative Example 5]

A cured product was obtained in a similar manner to Example 7 except that a mixture of 24.2 parts of bismercaptoethyl thiomercaptopropane and 25.5 parts of pentaerythritol tetrakis mercaptopropionate (water content: refer to Table 1) was used.

The glass transition temperatures of a cured product (polythiourethane-based resin plastic lens) obtained in each of the Examples and Comparative examples was measured by the method described above.

Results for the above measurement are illustrated in Table 1. By comparison between Examples 1 to 4 and Comparative Examples 1 to 3, comparison between Examples 5 and 6 and Comparative Example 4, and comparison between Examples 7 and 8 and Comparative Example 5, it can be confirmed that use of a polythiol compound having a water content of less than 20 ppm has improved heat resistance of a cured product (polythiourethane-based resin plastic lens) (specifically, improvement of 3°C or more as a glass transition temperature). Note that a difference in heat resistance was hardly observed between Example 1 and Example 2 in which the curable composition preparing step and the injection step were performed using a polythiol compound having the same water content in atmospheres with different values of absolute humidity. Meanwhile, comparison between Examples 1 and 3 and Comparative Examples 1 and 2 in which the curable composition preparing step and the injection step were performed using polythiol compounds having different water contents in an atmosphere with the same value of absolute humidity indicates that Examples 1 and 3 have achieved improvement in heat resistance compared with Comparative Examples 1 and 2 (specifically, improvement of 3°C or more as a glass transition temperature). From this result, it can be confirmed that water derived from a polythiol compound has a large influence on the heat resistance of a polythiourethane-based resin.

**[Table 1]**

| | [Polyiso(thio)cyanate compound] | Polythiol compound | Water content of polythiol compound | Absolute humidity of atmosphere in which curable composition preparing step and injection step were performed | Glass transition temperature (Tg) |
|---|---|---|---|---|---|
| Example 1 | Xylylene diisocyanate | Bis(mercaptomethyl)-3,6,9-trithia-undecanedithiol | 10 ppm | 18 g/m³ | 103°C |
| Example 2 | | | 10 ppm | 8 g/m³ | 104°C |
| Example 3 | | | 18 ppm | 18 g/m³ | 101°C |
| Example 4 | | | 18 ppm | 8 g/m³ | 102°C |
| Comparative Example 1 | | | 25 ppm | 18 g/m³ | 98°C |
| Comparative Example 2 | | | 100 ppm | 18 g/m³ | 97°C |
| Comparative Example 3 | | | 100 ppm | 12 g/m³ | 97°C |
| Example 5 | Bisisocyanatomethyl cyclohexane | Bismercaptomethyldithiane + pentaerythritol tetrakis mercaptopropionate | 16 ppm | 18 g/m³ | 118°C |
| Example 6 | | | 10 ppm | 10 g/m³ | 120°C |
| Comparative Example 4 | | | 32 ppm | 18 g/m³ | 114°C |
| Example 7 | Bisisocyanatomethyl bicycloheptane | Bismercaptoethyl thiomercaptopropane + pentaerythritol tetrakis mercaptopropionate | 17 ppm | 18 g/m³ | 118°C |
| Example 8 | | | 12 ppm | 10 g/m³ | 120°C |
| Comparative Example 5 | | | 38 ppm | 18 g/m³ | 114°C |

### [Evaluation of striae and white turbidity]

The cured products (polythiourethane-based resin plastic lenses) obtained in the Examples and Comparative Examples were evaluated as follows. If a cured product is evaluated to be B or more in both evaluation results of striae and white turbidity, the cured product can be judged to be quite homogeneous, excellent in transparency, and suitable as an eyeglass lens substrate.

### (Evaluation of striae)

The plastic lenses were subjected to a projection test using an appearance inspection apparatus Optical Modulex SX-UI251HQ manufactured by Ushio Inc. As a highpressure ultraviolet (UV) lamp of a light source, a white screen was disposed at a position of 1 m from the light source using USH-102D manufactured by Ushio Inc. A plastic lens to be evaluated was inserted between the light source and the screen, and a projected image on the screen was visually observed and judged according to the following criteria.
A⁺: No linear defect is confirmed in a projected image.
A: A very light linear defect is confirmed in a projected image.
B: A light linear defect is confirmed in a projected image.
C: A dense linear defect is confirmed in a projected image.
D: A marked linear defect is confirmed in a projected image.

### (Evaluation of white turbidity)

The plastic lenses were visually observed under a fluorescent lamp in a dark box, and judged according to the following criteria.
A⁺: No white turbidity is confirmed in a plastic lens.
A: Very light white turbidity is confirmed in a plastic lens.
B: Light white turbidity is confirmed in a plastic lens.
C: Dense white turbidity is confirmed in a plastic lens.
D: Marked white turbidity is confirmed in a plastic lens.

Results for the above measurement are illustrated in Table 2. From the results illustrated in Table 2, it can be confirmed that use of a polythiol compound having a water content of less than 20 ppm has achieved reduction of striae of a cured product (polythiourethane-based resin plastic lens) and suppression of white turbidity thereof.

**[Table 2]**

| | Water content of polythiol compound | Absolute humidity of atmosphere in which curable composition preparing step and injection step were performed | Evaluation of striae | Evaluation of white turbidity |
|---|---|---|---|---|
| Example 1 | 10 ppm | 18 g/m³ | A | A |
| Example 2 | 10 ppm | 8 g/m³ | A⁺ | A⁺ |
| Example 3 | 18 ppm | 18 g/m³ | B | B |
| Example 4 | 18 ppm | 8 g/m³ | A | A⁺ |
| Comparative Example 1 | 25 ppm | 18 g/m³ | C | C |
| Comparative Example 2 | 100 ppm | 18 g/m³ | C | C |
| Comparative Example 3 | 100 ppm | 12 g/m³ | C | C |
| Example 5 | 16 ppm | 18 g/m³ | A | B |
| Example 6 | 10 ppm | 10 g/m³ | A | A |
| Comparative Example 4 | 32 ppm | 18 g/m³ | B | C |
| Example 7 | 17 ppm | 18 g/m³ | B | B |
| Example 8 | 12 ppm | 10 g/m³ | A | A |
| Comparative Example 5 | 38 ppm | 18 g/m³ | B | C |

Finally, the above-described aspects will be summarized.

An aspect can provide a method for producing a cured product, including: a curable composition preparing step of preparing a curable composition by mixing a polyiso(thio)cyanate compound with a polythiol compound having a water content of less than 20 ppm on a mass basis; and a curing step of curing the curable composition to obtain a cured product.

According to the method for producing a cured product, by using a polythiol compound having a water content of less than 20 ppm on a mass basis, heat resistance of a cured product (polythiourethane-based resin) obtained by a curing reaction between a polyiso(thio)cyanate compound and a polythiol compound can be improved.

In an aspect, the water content of the polythiol compound on a mass basis is 5 ppm or more and less than 20 ppm.

In an aspect, the curable composition preparing step is performed in an atmosphere in which absolute humidity is 18 g/m³ or less, preferably 15 g/m³ or less, more preferably 12 g/m³ or less, still more preferably less than 12 g/m³, further still more preferably 10 g/m³ or less, and further still more preferably less than 10 g/m³.

In an aspect, the curing step is performed by subjecting the curable composition to cast polymerization.

In an aspect, a step of injecting the curable composition into a molding die for cast polymerization (injection step) is performed in an atmosphere in which absolute humidity is 18 g/m³ or less, preferably 15 g/m³ or less, more preferably 12 g/m³ or less, still more preferably less than 12 g/m³, further still more preferably 10 g/m³ or less, and further still more preferably less than 10 g/m³.

In an aspect, the cured product is an eyeglass lens substrate.

Another aspect provides a cured product obtained by curing a curable composition containing a polyiso(thio)cyanate compound and a polythiol compound having a water content of less than 20 ppm on a mass basis.

The cured product can exhibit high heat resistance. In an aspect, the cured product has a glass transition temperature (Tg) of 98°C or higher, preferably of 100°C or higher (for example, 100 to 150°C).

In an aspect, the water content of the polythiol compound on a mass basis is 5 ppm or more and less than 20 ppm.

Another aspect provides an eyeglass lens substrate including the cured product.

The embodiment disclosed here is exemplary in all respects, and it should be considered that the embodiment is not restrictive. The scope of the present invention is defined not by the above description but by claims, and intends to include all modifications within meaning and a scope equal to claims.

An aspect of the present invention is useful in the field of producing various kinds of optical components such as an eyeglass lens.

## Claims

1. A method for producing a cured product, comprising:
a curable composition preparing step of preparing a curable composition by mixing a polyiso(thio)cyanate compound with a polythiol compound having a water content of less than 20 ppm on a mass basis; and
a curing step of curing the curable composition to obtain a cured product.

2. The method for producing a cured product according to claim 1, wherein the polythiol compound has a water content of 5 ppm or more and less than 20 ppm on a mass basis.

3. The method for producing a cured product according to claim 1 or 2, wherein the curing step is performed by subjecting the curable composition to cast polymerization.

4. The method for producing a cured product according to any one of claims 1 to 3, wherein the cured product is an eyeglass lens substrate.

5. A cured product obtained by curing a curable composition containing a polyiso(thio)cyanate compound and a polythiol compound having a water content of less than 20 ppm on a mass basis.

6. The cured product according to claim 5, wherein the polythiol compound has a water content of 5 ppm or more and less than 20 ppm on a mass basis.

7. An eyeglass lens substrate comprising the cured product according to claim 5 or 6.
